# FASCICULE DE BREVET EUROPEEN

(11) **EP 0 597 771 B1**
(45) Date de publication et mention de la délivrance du brevet: **05.03.1997**
(21) Numéro de dépôt: 93402743.4
(22) Date de dépôt: 09.11.1993
(51) Int. Cl.: G01B 11/26, G02B 6/42, G02B 6/32

(54) **Dispositif de contrôle du centrage d'un faisceau lumineux, application à l'introduction de ce faisceau dans une fibre optique**
Überwachungseinrichtung zur optischer Bündelzentrierung, Verwendung zur Bündeleinführung in optische Faser
Optical beam centralisation adjusting device, application to the introduction of the beam in an optical fibre

(30) Priorité: 13.11.1992 FR 9213660
(43) Date de publication de la demande: 18.05.1994
(73) Titulaire: COMMISSARIAT A L'ENERGIE ATOMIQUE, 75015 Paris (FR)
(72) Inventeur: Alfille, Jean-Pascal, F-92140 Clamart (FR)
(74) Mandataire: Dubois-Chabert, Guy

(56) Documents cités:
- SPIE-OPTICAL ALIGNEMENT vol. 251 , 29 Juillet 1980 , WASHINGTON,USA pages 131 - 135 D.M.SWAIN 'CENTRATION OF A LINEAR CONE TO THE OPTICAL AXIS OF A REFLAXICON'

## Description

La présente invention concerne un dispositif de contrôle du centrage d'un faisceau lumineux c'est-à-dire un dispositif de contrôle de la coïncidence entre l'axe d'un faisceau lumineux et un axe de travail.

L'invention s'applique notamment à l'introduction d'un faisceau lumineux dans une fibre optique et, en particulier, à l'introduction d'un faisceau lumineux, issu d'un laser de puissance, dans une fibre optique.

L'invention trouve en particulier des applications dans le domaine de l'usinage par laser de puissance.

Dans les techniques de transmission d'un faisceau laser de puissance par une fibre optique, se pose le problème de l'introduction du faisceau laser dans cette fibre.

Etant donné que le diamètre des fibres optiques utilisées dans l'industrie varie de 0,6 à 1 mm, le centrage d'un point de focalisation d'un faisceau lumineux (point dont le diamètre est de l'ordre de 0,3 à 0,5 mm) sur la face d'entrée d'une fibre optique devient critique, particulièrement pour un faisceau laser de puissance, cette puissance étant par exemple supérieure à 1kW.

Les défauts de centrage et/ou de focalisation axiale sur la face d'entrée d'une fibre optique conduisent à un échauffement et une destruction rapide de cette face d'entrée.

Pour réaliser, à distance, des opérations de traitement de matériaux, telles que le perçage, le soudage, le découpage ou le traitement de surface d'un matériau, il est connu d'utiliser un faisceau lumineux issu d'un laser du type YAG, faisceau que l'on transporte par une fibre optique sur une distance qui peut aller de quelques mètres à quelques centaines de mètres, après quoi ce faisceau est reconditionné puis focalisé par une tête de focalisation sur le matériau à traiter.

Actuellement, les lasers YAG ont des puissances qui dépassent 1 kW et des lasers YAG fournissant des puissances de plusieurs kW seront bientôt disponibles.

Dans le domaine de l'usinage par laser YAG de puissance, il est intéressant de transporter le faisceau lumineux issu d'un tel laser par une fibre optique pour plusieurs raisons.

D'une part, ce transport par fibre optique permet de relier la source laser YAG à un robot pour réaliser des opérations de découpage, de perçage, de soudage, ou de traitement de surfaces tridimensionnelles en milieu industriel.

D'autre part, un tel transport permet également de relier la source laser YAG à un robot qui est introduit dans une cellule active pour des interventions dans un milieu hostile, par exemple pour des opérations de démantèlement ou de réparation.

A ce sujet, on pourra consulter le document EP-A-0367648 qui porte sur un procédé et un dispositif de soudage à distance d'un manchon dans un tube faisant par exemple partie d'un générateur de vapeur d'une centrale nucléaire.

L'introduction d'un faisceau laser dans une fibre optique n'est pas simple à réaliser, surtout avec un faisceau issu d'un laser YAG de grande puissance.

En effet, le principal problème à résoudre est de faire pénétrer dans la fibre optique le maximum de la puissance du laser.

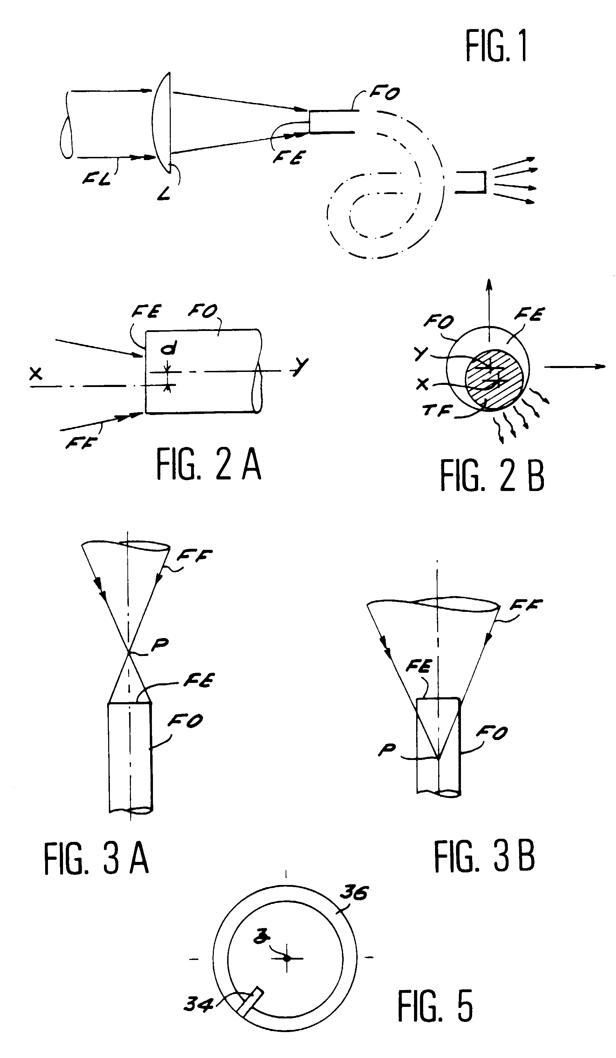

Pour ce faire, comme on le voit sur la figure 1, un faisceau lumineux FL, issu d'un laser non représenté, est focalisé sur la face d'entrée FE d'une fibre optique FO au moyen d'une lentille de focalisation L.

Pour résoudre le problème ci-dessus, il faut non seulement que la fibre résiste à une forte densité de puissance lumineuse mais il faut également minimiser un défaut de centrage ainsi qu'un défaut de focalisation axiale pour diminuer l'échauffement de la face d'entrée de la fibre.

La figure 2A montre l'axe de symétrie X du faisceau focalisé FF ainsi que l'axe de symétrie Y de la fibre optique FO (ou plus précisément l'axe de symétrie du coeur de cette fibre).

Le défaut de centrage réside dans l'existence d'un écart d entre les axes X et Y.

Ce défaut de centrage est également visible sur la figure 2B qui montre la non-coïncidence entre le centre de la face d'entrée FE et le centre de la tache focale TF du faisceau sur cette face d'entrée.

L'écart d entre les deux axes X et Y provoque un échauffement du bord de la fibre optique ainsi que des gradients de température qui n'ont plus de symétrie de révolution et provoquent à terme la destruction de la face d'entrée de la fibre.

Le deuxième défaut, à savoir le défaut de focalisation axiale par rapport à la face d'entrée de la fibre optique, est illustré par les figures 3A et 3B.

En fait, ce deuxième défaut est double soit le "point" P de focalisation du faisceau laser FF est situé au-dessus de la face d'entrée FO de la fibre optique (figure 3A), soit ce "point" P de focalisation est à l'intérieur de la fibre optique FO (figure 3B).

Tant avec une sur-focalisation (figure 3A) qu'avec une sous-focalisation (figure 3B), on échauffe la périphérie de la face d'entrée FE de la fibre FO et l'on provoque à terme la destruction de cette face d'entrée.

La présente invention vise notamment à identifier les défauts de centrage ainsi que les défauts de focalisation axiale qui sont susceptibles d'apparaître entre autres pendant des opérations de traitement de matériaux (par exemple des opérations d'usinage de pièces mécaniques) par laser, afin de pouvoir corriger ces défauts en temps réel.

On ajoutera que les lasers YAG présentent l'inconvénient mentionné ci-après.

Lors d'un changement d'un paramètre d'émission d'un laser YAG, par exemple la fréquence de tir, la durée de chaque impulsion, l'énergie de chaque impulsion, on peut constater des variations dimensionnelles du diamètre du faisceau issu du laser et des variations du pointage de ce faisceau.

Même en utilisant un système optique afocal pour réduire ces instabilités il subsiste des variations de centrage du faisceau et de focalisation axiale sur la face d'entrée de la fibre optique.

De tels défauts sont très gênants pour des fibres optiques de faible section transversale, par exemple des fibres optiques de 0,6 mm de diamètre.

Ces défauts, qui sont intrinsèques à la source laser, augmentent d'ailleurs avec la puissance de cette source.

Ainsi, le contrôle de l'état de la focalisation d'un faisceau laser sur la face d'entrée d'une fibre optique est important pour la durée de vie de cette fibre.

On connaît déjà, par le document SPIE-OPTICAL ALIGNMENT, vol, 251, 29 juillet 1980, D. M. SWAIN, une technique permettant de faire coïncider l'axe d'un miroir tronconique ("linear cone") et l' axe z commun à un miroir conique ("inner axicon") et à un autre miroir tronconique ("outer axicon"). On utilise un faisceau laser d'axe z qui se réfléchit sur ce miroir conique puis successivement sur les deux miroirs tronconiques pour être focalisé en un point de l'axe z lorsque les deux axes sont confondus.

La présente invention vise à résoudre le problème du contrôle du centrage et de la focalisation axiale d'un faisceau lumineux sur la face d'entrée d'une fibre optique, afin de minimiser l'échauffement de celle-ci.

Plus généralement, l'invention vise à résoudre le problème du contrôle du centrage d'un faisceau lumineux, c'est-à-dire le contrôle de la coïncidence entre l'axe de ce faisceau et un axe de travail (qui, dans le cas particulier considéré ci-dessus, est l'axe au coeur de la fibre optique).

Pour résoudre ce problème, le dispositif objet de l'invention est conforme à la revendication 1.

Certes, on connaît déjà par le brevet canadien n 1 210 077 un procédé de traitement d'un matériau par laser, par l'intermédiaire d'une fibre optique et l'on connaît aussi par le document US-A-4 868 361 un dispositif de couplage pour des fibres optiques transportant des faisceaux lasers de grande puissance, mais aucun de ces deux documents ne mentionne une caractéristique importante de la présente invention, à savoir le prélèvement d'une partie du faisceau lumineux le long d'un cercle dont l'axe est ledit axe de travail.

Selon un premier mode de réalisation particulier du dispositif objet de l'invention, les moyens de prélèvement et de détection comprennent :
- un premier miroir tronconique dont l'axe coïncide avec l'axe de travail, qui comporte, à son sommet, un perçage centré sur l'axe de travail, et qui est prévu pour prélever ladite partie du faisceau lumineux le long dudit cercle et pour réfléchir la lumière ainsi prélevée,
- un deuxième miroir tronconique dont l'axe coïncide également avec l'axe de travail, qui est solidaire du premier miroir tronconique et entoure ce dernier et qui est prévu pour réfléchir la lumière réfléchie par ce premier miroir tronconique, et
- des moyens de détection de la lumière réfléchie par le deuxième miroir tronconique.

Ces moyens de détection peuvent comprendre :
- des moyens d'échantillonnage prévus pour échantillonner la lumière réfléchie par le deuxième miroir tronconique, et
- un photodétecteur pour détecter les échantillons de lumière successivement formés, ce photodétecteur permettant l'analyse de ladite distribution angulaire.

Dans une première réalisation particulière, les moyens d'échantillonnage comprennent :
- un troisième miroir qui est situé sur le trajet de la lumière réfléchie par le deuxième miroir tronconique pour intercepter une partie de cette lumière, qui est prévu pour réfléchir, vers le photodétecteur, cette partie ainsi interceptée, et qui est mobile en rotation autour d'un axe qui rencontre l'axe de travail, et
- des moyens de rotation du troisième miroir autour de cet axe de rotation de façon à former successivement les échantillons de lumière.

Dans une autre réalisation particulière, ces moyens d'échantillonnage comprennent :
- un organe qui est placé en regard du deuxième miroir tronconique, qui est pourvu d'un perçage central pour laisser passer le faisceau lumineux dirigé vers les moyens de prélèvement et d'un perçage latéral pour laisser passer une partie de la lumière réfléchie par ce deuxième miroir tronconique, et qui est mobile en rotation autour de l'axe de travail,
- des moyens de rotation de cet organe autour de l'axe de travail, de sorte que cet organe laisse passer des échantillons de lumière successifs, et
- un troisième miroir qui est pourvu d'un perçage central pour laisser passer le faisceau lumineux dirigé vers les moyens de prélèvement et qui est prévu pour recevoir ces échantillons de lumière successifs et les réfléchir vers le photodétecteur.

Dans une autre réalisation particulière, les moyens de détection comprennent :
- un troisième miroir qui est pourvu d'un perçage central pour laisser passer le faisceau lumineux dirigé vers les moyens de prélèvement et qui est placé en regard du deuxième miroir tronconique, pour intercepter la lumière réfléchie par celui-ci, et
- un photodétecteur bidimensionnel prévu pour recevoir la lumière réfléchie par ce troisième miroir, ce photodétecteur permettant d'analyser globalement ladite distribution angulaire.

Selon un deuxième mode de réalisation particulier du dispositif objet de l'invention, les moyens de prélèvement et de détection comprennent :
- un ensemble de prélèvement et d'échantillonnage comportant :
   - un premier miroir qui est incliné par rapport à l'axe de travail et qui est prévu pour prélever une partie du faisceau, à la périphérie de celui-ci, le long dudit cercle, et pour réfléchir cette partie prélevée,
   - un deuxième miroir qui est incliné par rapport à l'axe de travail, qui est solidaire du premier miroir incliné et qui est prévu pour réfléchir la lumière réfléchie par ce premier miroir incliné, et
   - des moyens de rotation de l'ensemble formé par les premier et deuxième miroirs inclinés, autour de l'axe de travail,
- un troisième miroir qui est pourvu d'un perçage central pour laisser passer le faisceau lumineux dirigé vers l'ensemble de prélèvement et d'échantillonnage et qui est prévu pour intercepter la lumière réfléchie par le deuxième miroir incliné, et
- un photodétecteur pour détecter la lumière réfléchie par ce troisième miroir, ce photodétecteur permettant l'analyse de ladite distribution angulaire.

Dans ce cas, le dispositif objet de l'invention comprend en outre, de préférence, des moyens de translation de l'ensemble formé par les premier et deuxième miroirs inclinés, perpendiculairement à l'axe de travail.

Ceci permet d'adapter le dispositif à des faisceaux lumineux de diamètres différents.

La présente invention a également pour objet un système d'introduction d'un faisceau lumineux dans une fibre optique, ce système comprenant des moyens de focalisation du faisceau lumineux sur la face d'entrée de la fibre optique,
ce système étant caractérisé en ce qu'il comprend en outre le dispositif objet de l'invention, en ce que l'axe de travail est l'axe du coeur de la fibre optique et en ce que ledit cercle est dans le plan de la face d'entrée de cette fibre, le dispositif permettant alors de contrôler également la focalisation du faisceau lumineux sur la face d'entrée de la fibre, l'intensité lumineuse de la lumière détectée étant minimale lorsque cette focalisation est réalisée.

Dans le cas où l'on utilise un dispositif conforme à l'invention, comportant deux miroirs tronconiques pour prélever le faisceau lumineux, ce système peut comprendre en outre des moyens d'injection d'un fluide à l'intérieur du premier miroir tronconique vers la face d'entrée de la fibre optique, afin de refroidir celle-ci.

La présente invention sera mieux comprise à la lecture de la description d'exemples de réalisation donnés ci-après à titre purement indicatif et nullement limitatif, en faisant référence aux dessins annexés sur lesquels :
- la figure 1, déjà décrite, montre schématiquement la focalisation d'un faisceau laser sur la face d'entrée d'une fibre optique,
- la figure 2A, déjà décrite, illustre schématiquement un défaut un centrage du faisceau ainsi focalisé,
- la figure 2B, déjà décrite, est une vue de face schématique de la fibre optique, montrant aussi ce défaut de centrage,
- la figure 3A, déjà décrite, montre schématiquement un défaut de sur-focalisation,
- la figure 3B, déjà décrite, montre schématiquement un défaut de sous-focalisation,
- la figure 4 est une vue en coupe schématique d'un premier mode de réalisation particulier du dispositif objet de l'invention,
- la figure 5 illustre schématiquement un miroir utilisé dans le dispositif représenté sur la figure 4,
- la figure 6A illustre schématiquement un défaut de centrage du faisceau lumineux dans le dispositif représenté sur la figure 4,
- la figure 6B montre des variations d'intensité lumineuse détectées avec le dispositif de la figure 4 et dues à ce défaut de centrage,
- la figure 7A illustre schématiquement un recentrage du faisceau lumineux,
- la figure 7B montre les variations de l'intensité lumineuse détectées après ce recentrage,
- la figure 8 illustre schématiquement la correction de focalisation axiale que l'on est susceptible de réaliser après contrôle de cette focalisation grâce au dispositif de la figure 4,
- la figure 9 est une vue en coupe schématique d'un deuxième mode de réalisation particulier du dispositif objet de l'invention,
- la figure 10 montre schématiquement la fente d'un organe tournant faisant partie du dispositif de la figure 9,
- la figure 11 est une vue en coupe schématique d'un troisième mode de réalisation particulier du dispositif objet de l'invention, comportant un détecteur bidimensionnel,
- la figure 12 est une vue en coupe schématique d'un quatrième mode de réalisation particulier du dispositif objet de l'invention,
- la figure 13 illustre schématiquement un ensemble de deux miroirs plans qui est utilisé dans le dispositif de la figure 12, et
- la figure 14 est une vue en coupe schématique d'un cinquième mode de réalisation particulier du dispositif objet de l'invention.

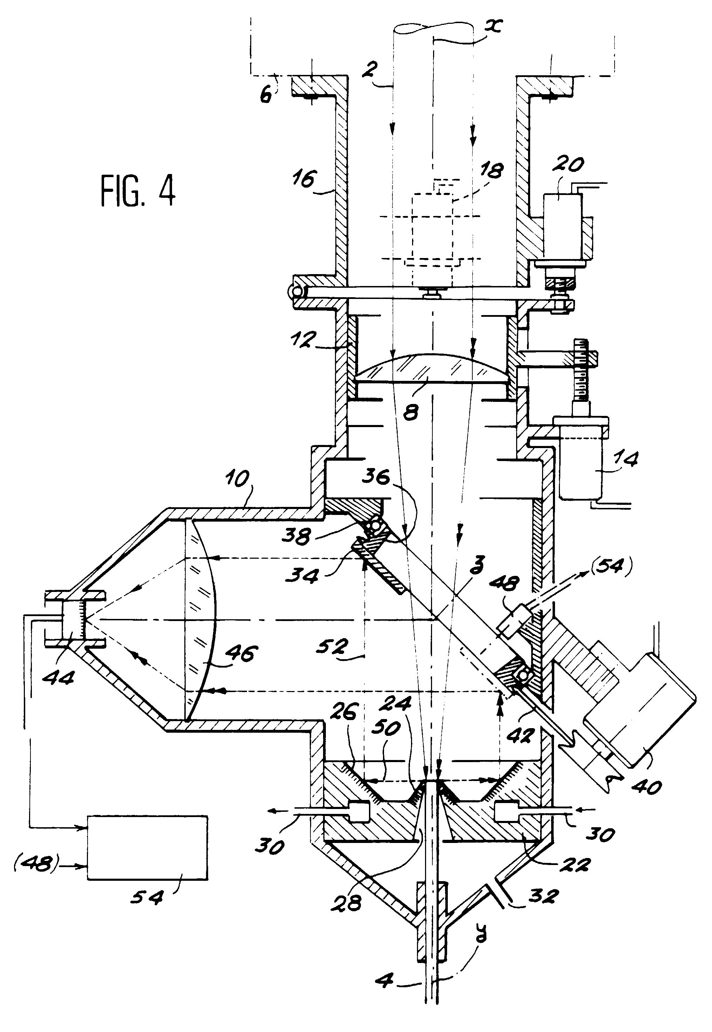

La figure 4 montre une vue en coupe schématique d'un dispositif conforme à l'invention.

Ce dispositif est incorporé dans un système de focalisation d'un faisceau laser 2, dont l'axe porte la référence x, dans une fibre optique 4, dont l'axe porte la référence y (il s'agit plus précisément de l'axe du coeur de cette fibre).

On voit sur la figure 4 le laser 6 qui émet le faisceau 2 et une lentille de focalisation 8 grâce à laquelle le faisceau 2 est focalisé sur la face d'entrée de la fibre 4.

Le dispositif conforme à l'invention, qui permet de contrôler le centrage du faisceau 2, c'est-à-dire la coïncidence entre les axes x et y, ainsi que la focalisation de ce faisceau sur la face d'entrée de la fibre, est monté dans un bâti de focalisation 10.

La lentille 8 est montée dans le bâti 10, sur un support 12 qui est déplaçable en translation parallèlement à l'axe y grâce à un moteur électrique 14.

Avant de pénétrer dans la tête de focalisation 10, le faisceau laser 2 traverse un corps tubulaire 16 qui est rigidement solidaire du laser 6.

Deux moteurs électriques 18 et 20 sont prévus pour faire varier l'orientation de la tête de focalisation 10 par rapport au corps tubulaire 16, afin de recentrer, lorsque c'est nécessaire, le point de focalisation sur la face d'entrée de la fibre optique.

Le dispositif conforme à l'invention, qui est représenté sur la figure 4, comprend un ensemble de prélèvement de lumière 22 qui est fixé dans la tête de focalisation 10 et qui comporte un premier miroir tronconique 24 et un deuxième miroir tronconique 26 entourant le miroir 24 et ayant le même axe que ce dernier, à savoir l'axe y.

Comme on le voit sur la figure 4, les cônes dont les miroirs 24 et 26 épousent la forme ont chacun un demi-angle au sommet de 45° et le cône correspondant au miroir 24 converge vers la lentille 8 tandis que le cône correspondant au miroir 26 converge dans la direction opposée.

L'ensemble de prélèvement 22 comporte un perçage conique 28 d'axe y, qui débouche au sommet du miroir tronconique 24.

La fibre optique 4 est montée dans la tête de focalisation 10 et sa face d'entrée, sur laquelle on focalise le faisceau lumineux, se trouve au niveau du bord supérieur du miroir tronconique 24, le diamètre du perçage 28 à ce niveau étant très légèrement supérieur à celui de la fibre optique 4.

L'ensemble de prélèvement 22 est muni de moyens de circulation d'eau 30 pour refroidir cet ensemble 22.

Un fluide de refroidissement, tel que l'air par exemple, pénètre dans la tête de focalisation 10 par une entrée 32 pour traverser ensuite le perçage tronconique 28, ce qui permet d'une part de refroidir l'extrémité de la fibre 4 qui reçoit le faisceau laser focalisé et contribue d'autre part à maintenir la fibre centrée dans le miroir tronconique 24.

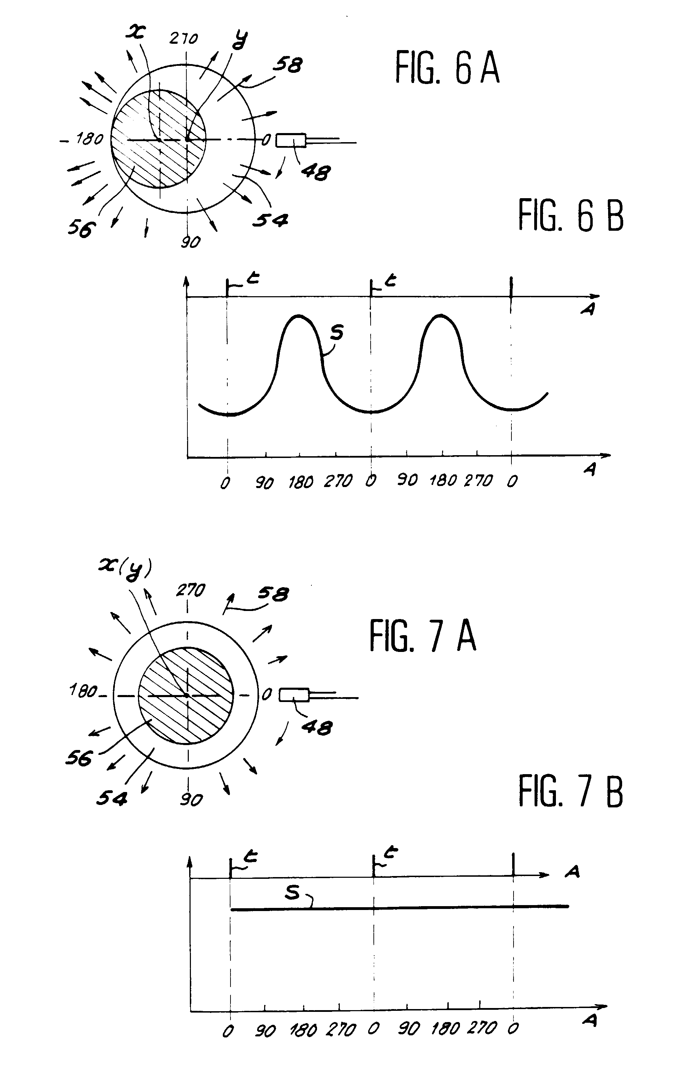

Le dispositif conforme à l'invention de la figure 4 comprend également un miroir mince 34 qui est fixé sur une bague 36 comme on le voit sur la figure 5.

Cette dernière est montée tournante, grâce à un roulement à billes 38, dans la tête de focalisation 10, entre la lentille 8 et l'ensemble de prélèvement 22.

Ce montage est tel que la bague soit traversée par le faisceau 2 focalisé, que le miroir 34 se trouve en regard du miroir tronconique 26, que l'axe z de la bague 36 (auquel le miroir 34 est perpendiculaire) rencontre l'axe y et fasse un angle de 45° avec ce dernier.

Un moteur électrique 40, qui se trouve à l'extérieur de la tête de focalisation 10 et qui en est solidaire, permet d'entraîner en rotation la bague 36 et donc le miroir 34 autour de l'axe z, par l'intermédiaire d'une courroie 42 qui traverse un perçage de la paroi de la tête de focalisation 10.

Cette tête de focalisation 10 porte également un photodétecteur 44 qui reçoit la lumière susceptible d'être réfléchie par le miroir mince 34, par l'intermédiaire d'une lentille de focalisation 46 est prévue pour focaliser cette lumière sur le photodétecteur 44.

Le dispositif conforme à l'invention, représenté sur la figure 4, comprend également un ensemble de synchronisation 48 qui est prévu pour fournir un signal de synchronisation à chaque tour du miroir mince 34.

Cet ensemble 48, qui est fixe par rapport à la tête de focalisation 10, comprend par exemple une source lumineuse prévue pour éclairer la face arrière du miroir mince 34 (dont la face avant est en regard de l'ensemble 22) ainsi qu'un photodétecteur prévu pour détecter la lumière réfléchie par cette face arrière.

Cette face arrière porte une bande (non représentée) qui ne réfléchit pas cette lumière de sorte que, à chaque tour du miroir mince 34, un "top" de synchronisation est engendré par ce photodétecteur (lorsque la bande passe devant l'ensemble de synchronisation 48).

On explique ci-après le fonctionnement du dispositif conforme à l'invention, représenté sur la figure 4.

Le faisceau issu du laser 6 est focalisé par la lentille 8 sur la face d'entrée de la fibre 4.

Une partie périphérique de ce faisceau focalisé ne pénètre pas dans la fibre 4. Cette partie est interceptée, ou prélevée, par la surface conique du miroir 24, ce prélèvement ayant ainsi lieu le long du cercle formé par le bord supérieur de ce miroir 24 (à l'endroit où débouche le perçage tronconique 28).

On notera à ce sujet qu'un des avantages de l'invention réside dans le fait qu'on prélève une partie du faisceau qui, de toute manière, est perdue pour la fibre.

Cette partie prélevée est réfléchie par le miroir 24 sous la forme d'un faisceau lumineux plan 50 qui est à son tour transformé, par réflexion sur le miroir tronconique 26, en un faisceau lumineux tubulaire 52.

Ce faisceau tubulaire est échantillonné par le miroir mince 34 : ce miroir 34 réfléchit successivement des parties du faisceau tubulaire (découpant ainsi ce faisceau tubulaire en échantillons de lumière) et les échantillons de lumière ainsi formés sont successivement détectés par le photodétecteur 44.

Des moyens appropriés 54, par exemple un oscilloscope, reçoivent le signal fourni par le photodétecteur 44 ainsi que le signal fourni par l'ensemble de synchronisation 48 et permettent d'analyser la distribution angulaire de l'intensité lumineuse qui ne passe pas dans la fibre optique.

On voit qu'on peut ainsi contrôler le centrage et la focalisation axiale du faisceau lumineux sur la face d'entrée de la fibre : lorsque le faisceau focalisé est centré sur cette face d'entrée, c'est-à-dire lorsque les axes x et y coïncident, cette distribution angulaire est uniforme et, lorsque le faisceau est correctement focalisé sur la face d'entrée, cette distribution angulaire uniforme passe par un minimum.

Pour mieux comprendre l'utilisation du dispositif conforme à l'invention, représenté sur la figure 4, on explique ci-après le mode opératoire de réglage du faisceau lumineux focalisé.

Pour simplifier l'exposition de ce mode opératoire, on suppose que le laser 6 fonctionne de façon quasi-continue, la période des impulsions lumineuses produites par ce laser étant par exemple de l'ordre de 500 Hz.

Le miroir mince 34 étant mis en rotation grâce au moteur 40 et l'ensemble 48 fournissant un signal de synchronisation à chaque tour du miroir 34, on commence par contrôler et corriger le défaut de centrage du "point" de focalisation sur la face d'entrée de la fibre optique 4.

Comme on le voit sur la figure 6A, lorsqu'il y a un défaut de centrage, le faisceau d'axe x qui est focalisé sur la face d'entrée 54 de la fibre et qui forme une tache focale 56 sur cette face d'entrée, ne coïncide pas avec l'axe y de la fibre.

La lumière 58, qui est prélevée par le miroir tronconique 24, ne présente pas de symétrie de révolution autour de l'axe y.

En conséquence, l'intensité du faisceau lumineux reçu par le photodétecteur 44 varie lorsque le miroir mince 34 fait un tour et il en est de même pour le signal de tension S fourni par ce photodétecteur 44.

Ceci est illustré par la figure 6B où l'on voit, en fonction de l'angle A de rotation du miroir mince 34, les variations de ce signal S ainsi que les variations du signal de synchronisation t, qui est composé de "tops" de synchronisation.

Dans l'exemple représenté, ceux-ci coïncident avec les minima du signal de tension S.

En commandant les moteurs 18 et 20 par des moyens non représentés, on fait alors basculer l'ensemble de la tête de focalisation 10 pour recentrer le point de focalisation sur la face d'entrée de la fibre optique.

Ce recentrage est schématiquement illustré par la figure 7A.

On voit sur la figure 7B le signal S alors fourni par le photodétecteur 44.

Ce signal S ne présente plus des maxima périodiques comme dans le cas de la figure 6B : son intensité est indépendante de l'angle A puisque, dans le cas où le faisceau est centré sur la face d'entrée de la fibre, la distribution angulaire de l'intensité de la lumière qui ne pénètre pas dans la fibre est uniforme.

On cherche ensuite la position, suivant l'axe y, du point de focalisation conduisant à un minimum pour l'énergie lumineuse prélevée autour de la fibre par le miroir tronconique 24.

Pour ce faire, on déplace, grâce au moteur 14, la lentille de focalisation 8 jusqu'à la fourniture d'un signal de tension minimum de la part du photodétecteur 44.

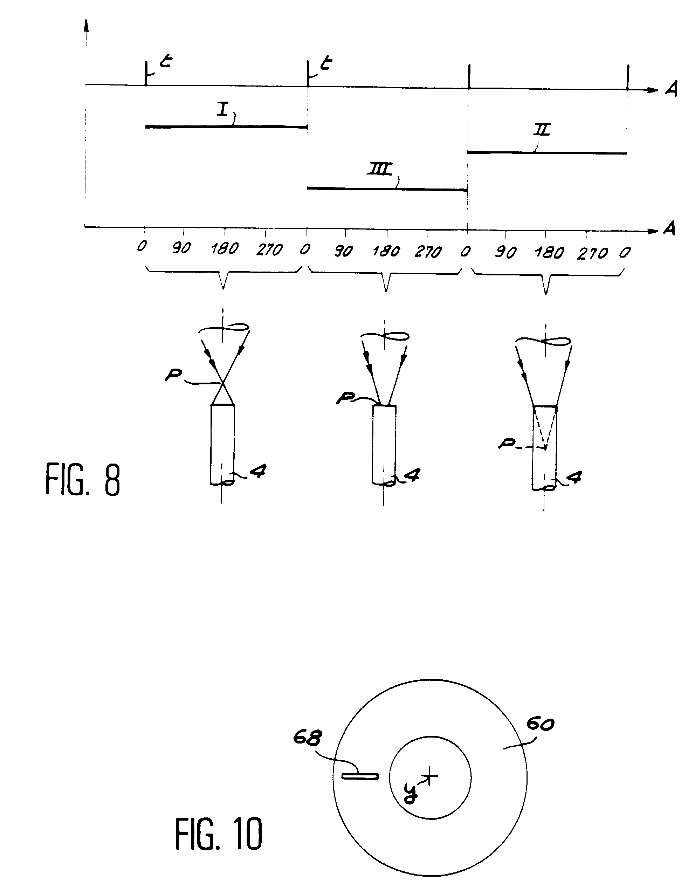

Ceci est schématiquement illustré par la figure 8 qui montre le signal de tension S lors de cette recherche de la position axiale optimale de la tache focale.

On voit le signal S obtenu dans le cas d'une sur- focalisation (courbe I), dans le cas d'une sous-focalisation (courbe II) et enfin dans le cas de la focalisation recherchée (courbe III).

On remarquera que, lors de la translation de la lentille 8, s'il apparaît une dissymétrie de la répartition de puissance lumineuse autour de la fibre 4, cela indique que le faisceau lumineux incident 2 est mal centré sur cette lentille 8, d'où un détérioration de la qualité de la focalisation.

On peut alors, par des moyens non représentés, ne faisant pas partie de l'invention, recentrer le faisceau incident 2 sur cette lentille 8.

Après cette correction de centrage du faisceau sur la lentille 8, on recommence l'opération de correction du défaut de centrage sur la fibre 4 puis la correction du défaut de focalisation axiale sur la fibre, et ainsi de suite jusqu'à ce que le centrage et la focalisation soient corrects.

On notera qu'on peut commander manuellement les moteurs 14, 18 et 20 ou prévoir une commande automatique de ces moteurs, grâce à des moyens de commande non représentés qui reçoivent en entrée les signaux de synchronisation fournis par l'ensemble 48 ainsi que les signaux fournis par le photodétecteur 44 et qui commandent en conséquence les moteurs 14, 18 et 20 jusqu'à l'obtention du centrage et de la focalisation axiale du faisceau sur la fibre optique 4.

Dans ce cas, les défauts de centrage et de focalisation axiale sont corrigés par des moyens d'asservissement, qui sont utilisables notamment lors d'opérations d'usinage par laser de puissance.

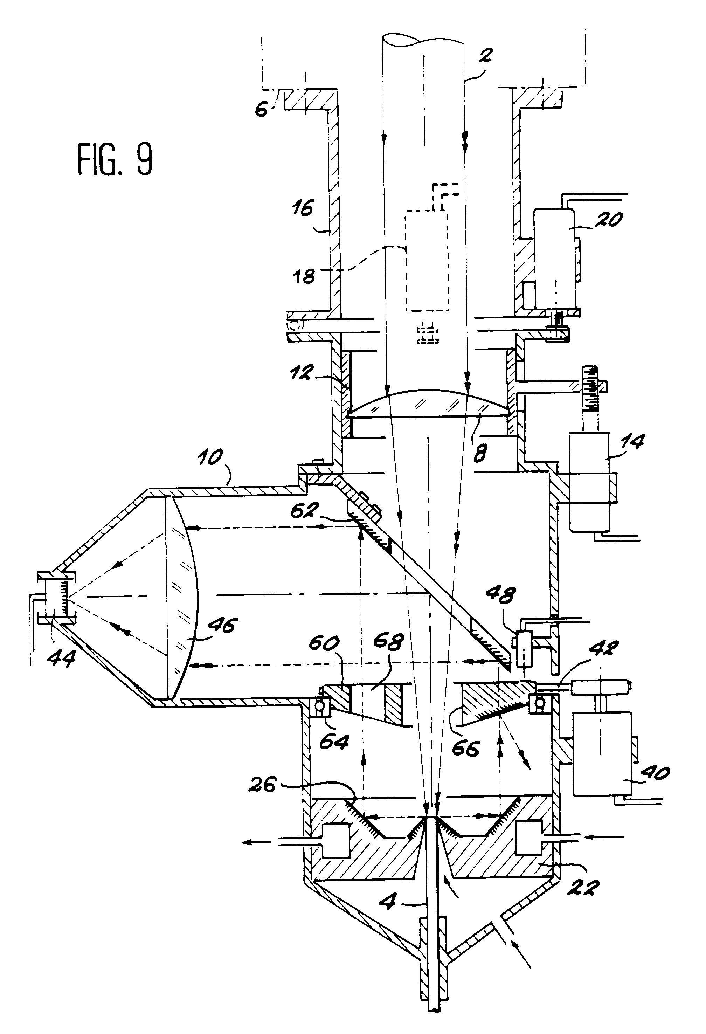

Sur la figure 9, on a représenté schématiquement un autre mode de réalisation particulier du dispositif de contrôle objet de l'invention.

Ce mode de réalisation particulier représenté sur la figure 9 diffère simplement de celui qui est représenté sur la figure 4 par les moyens d'échantillonnage : dans le cas de la figure 9, le miroir mince 34 de la figure 4, qui est monté sur la bague tournante 36, est remplacé par un ensemble comprenant une pièce tournante et percée 60 et un miroir plan percé fixe 62.

Plus précisément, la pièce 60 est disposée en regard de l'ensemble de prélèvement 22 et possède une symétrie de révolution autour de l'axe y.

Cette pièce 60 est mobile autour de son axe y grâce à un roulement à billes 64 et elle est entraînée en rotation par le moteur 40, par l'intermédiaire de la courroie 42 qui traverse encore un perçage de la paroi de la tête de focalisation 10.

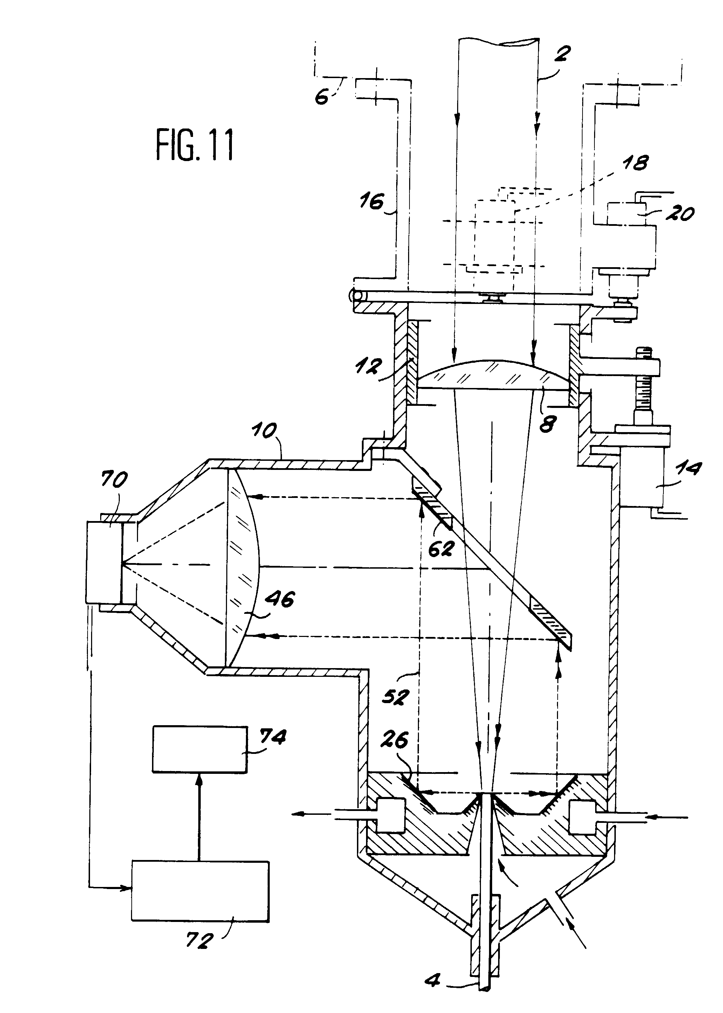

De plus, la pièce 60 comprend un premier perçage central 66 dont l'axe est l'axe y et qui est traversé par le faisceau focalisé par la lentille 8 ainsi qu'un autre perçage latéral 68 formant une fente mince rectangulaire qui s'étend perpendiculairement à l'axe y (voir la figure 10).

Cette fente rectangulaire 68 est en regard du miroir tronconique 26 de sorte qu'elle est traversée par une partie du faisceau tubulaire réfléchi par ce miroir 26.

Le miroir 62 est disposé entre la lentille 8 et la pièce 60 et ce miroir 62 est incliné à 45Y sur l'axe y comme on le voit sur la figure 9.

De plus, ce miroir 62 comprend un perçage central qui est traversé par le faisceau focalisé par cette lentille 8.

Ce miroir 62 est fixe et prévu pour recevoir les parties du faisceau tubulaire (échantillon de lumière) qui sont successivement sélectionnées par la fente 68 lorsque la pièce 60 tourne et pour réfléchir ces échantillons de lumière successifs vers le détecteur 44.

Dans le cas de la figure 9, l'ensemble de synchronisation 48 est fixé dans la tête de focalisation 10, en regard de la face supérieure de la pièce 60 (face qui est tournée vers le miroir 62).

Cette face est encore pourvue d'une barre ne réfléchissant pas la lumière, d'où l'obtention d'un "top" de synchronisation à chaque tour de la pièce 60.

On remarquera que la face inférieure de la pièce 60, face qui est en regard de l'ensemble de prélèvement 22, est légèrement conique et rendue réflectrice pour renvoyer le faisceau lumineux non prélevé grâce à la fente 68 vers une zone refroidie de l'ensemble de prélèvement 22.

Tout ceci permet encore de contrôler le centrage et la focalisation axiale du faisceau focalisé sur la fibre optique 4 et les réglages de centrage et de focalisation axiale sont identiques à ceux qui ont été expliqués plus haut.

Sur la figure 11, on a représenté schématiquement un troisième mode de réalisation particulier du dispositif objet de l'invention.

Ce troisième mode de réalisation particulier diffère de celui qui est représenté sur la figure 9 par le fait que la pièce 60, le moteur 40 et la courroie associée 42 sont supprimés.

De plus, le photodétecteur 44 est remplacé par un photodétecteur bidimensionnel 70 de type CCD.

Dans ce cas, la totalité du faisceau tubulaire 52 issu du miroir tronconique 26 est réfléchie par le miroir plan percé 62 et une image est formée, par l'intermédiaire de la lentille 46, sur le photodétecteur bidimensionnel 70.

L'ensemble de synchronisation 48 est également supprimé dans le dispositif de la figure 11.

Les signaux fournis par le photodétecteur bidimensionnel 70 sont envoyés à des moyens électroniques de traitement appropriés 72 qui permettent d'obtenir directement, sur un moniteur vidéo 74, une image bidimensionnelle, avec une information du niveau d'intensité pour chaque point de la matrice du photodétecteur bidimensionnel 70.

Il est alors possible d'activer, de façon manuelle ou de façon automatique, les moteurs 14, 18 et 20 comme on l'a expliqué plus haut, pour corriger les défauts de centrage et de focalisation axiale du faisceau lumineux sur la fibre optique 4.

Les dispositifs conformes à l'invention, qui ont été décrits en faisant référence aux figures 4 à 11, permettent par exemple l'introduction d'un faisceau fourni par un laser YAG, de puissance supérieure à 1kW, dans un milieu hostile, avec une transmission de la puissance lumineuse par une fibre optique, par exemple pour des opérations de démantèlement, de décontamination ou de réparation d'une installation nucléaire.

Ces dispositifs sont également utilisables dans l'Industrie pour des opérations d'usinage, par l'intermédiaire de fibres optiques, et permettent d'augmenter la durée de vie de la face d'entrée de ces fibres et/ou de transmettre des puissances lumineuses plus importantes par l'intermédiaire de ces fibres.

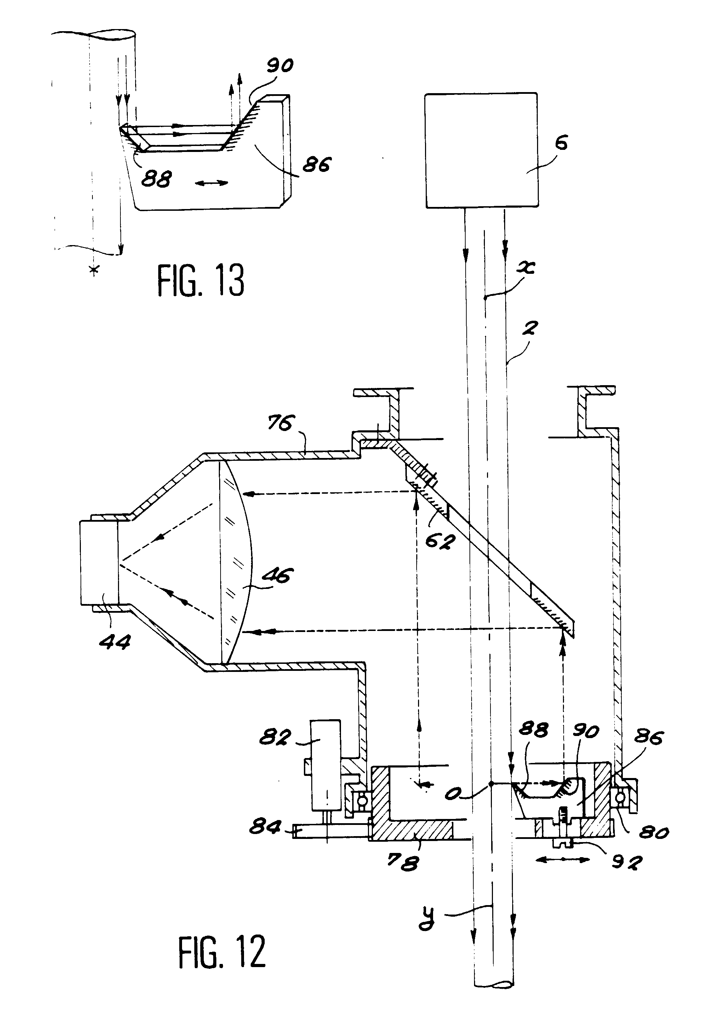

On décrit ci-après, en faisant référence aux figures 12 et 13 un autre dispositif conforme à l'invention permettant encore de contrôler la coïncidence entre l'axe d'un faisceau lumineux et un axe de travail (on peut également parler du contrôle du "pointage" de ce faisceau lumineux).

Un tel dispositif est par exemple utilisable avec un faisceau laser de puissance pour lequel des fibres optiques de transport ne sont pas disponibles sur le marché.

On voit sur la figure 12 un laser 6 qui produit un faisceau laser 2 dont l'axe est noté x et l'on veut contrôler la coïncidence entre cet axe x et un axe de travail y.

Le dispositif de la figure 12 comprend, dans un bâti 76 qui est traversé par le faisceau laser 2, le miroir plan percé 62 à 45° de l'axe y ainsi que la lentille de focalisation 46 et le photodétecteur 44.

Le dispositif de la figure 12 comprend également un barillet 78 qui est monté tournant autour de cet axe y dans le bâti 76 grâce à un roulement à billes 80.

Un moteur 82 est prévu pour faire tourner ce barillet 78, par exemple par l'intermédiaire d'une roue dentée 84 entraînant une couronne dentée formée sur la paroi externe du barillet 78.

Ce dernier possède un perçage central pour laisser passer le faisceau laser 2.

Le dispositif de la figure 12 comprend également un ensemble de prélèvement et d'échantillonnage 86 qui est monté sur le barillet 78 dans le bâti 76.

Cet ensemble 86 comprend un premier miroir plan mince 88 formant un angle de 45° avec l'axe y et prévu pour prélever une faible fraction du faisceau laser 2 à la périphérie de celui-ci.

Ainsi, lorsque le barillet 78 tourne autour de l'axe y, on prélève une faible fraction du faisceau laser le long d'un cercle dont l'axe est l'axe y.

L'ensemble 86 comprend également un deuxième miroir plan mince 90 qui forme également un angle de 45° avec l'axe y et qui se trouve en regard du premier miroir 88 comme on le voit sur les figures 12 et 13.

Ce deuxième miroir 90 est destiné à recevoir la lumière prélevée par le miroir 88 et réfléchie par celui-ci et pour diriger cette lumière vers le miroir plan percé 62 qui réfléchit cette lumière sur le photodétecteur 44 par l'intermédiaire de la lentille 46.

Ainsi, pour chaque position de l'ensemble 86, on forme un échantillon du faisceau laser 2 et l'on analyse cet échantillon et donc, par rotation du barillet 78, on analyse successivement des échantillons du faisceau laser 2.

On notera que cette analyse est réalisée dans un plan perpendiculaire à l'axe y et passant par un point O précis de cet axe y (point au niveau duquel se trouve l'extrémité du miroir 88).

On est ainsi capable de contrôler le pointage du faisceau laser en un point précis de la trajectoire de ce faisceau.

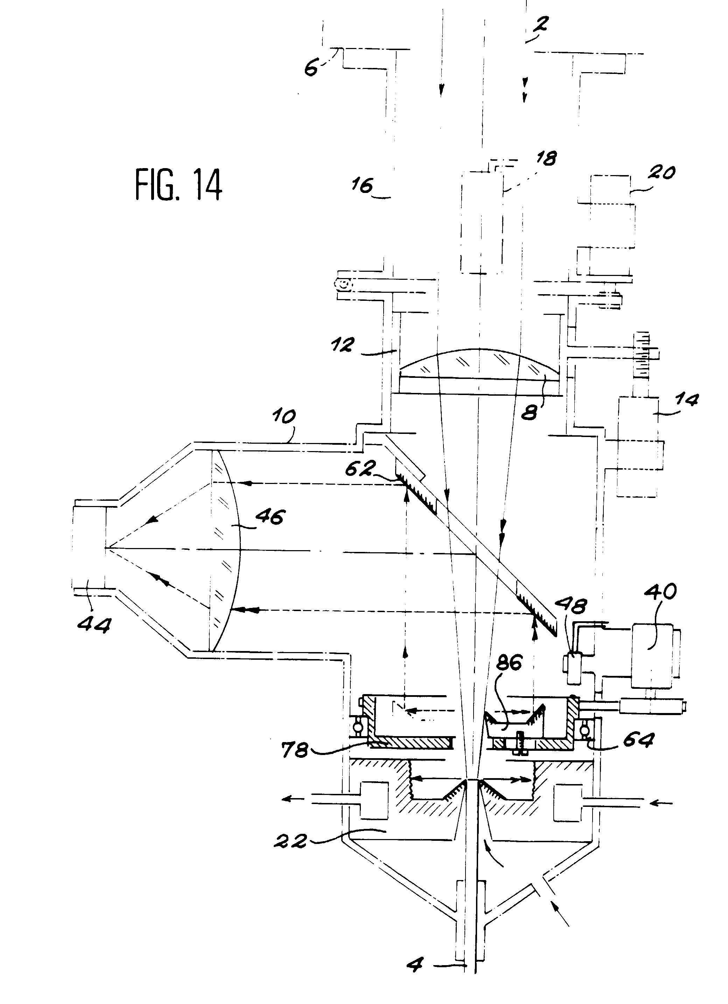

En effet, de la même manière qu'on l'a expliqué plus haut, si les axes x et y coïncident, la distribution angulaire de l'intensité lumineuse prélevée autour de l'axe y doit être uniforme (pour avoir des "tops" de synchronisation, on utilise encore un ensemble de synchronisation non représenté sur la figure 12 mais visible sur la figure 14).

Comme on le voit sur la figure 12, l'ensemble de prélèvement et d'échantillonnage 86 est réglable en translation perpendiculairement à l'axe y, par exemple, grâce à une vis de serrage 92 traversant une fente radiale du barillet 78.

Un telle translation permet de régler la quantité d'énergie lumineuse prélevée.

En outre, cette translation permet d'adapter le dispositif de la figure 12 à différents diamètres de faisceaux lumineux.

Le dispositif de la figure 12 permet également d'obtenir des indications sur la forme du faisceau laser 2.

Si, par exemple, ce faisceau a tendance à être oval, cela indique qu'il faut retoucher les miroirs de la cavité du laser 6.

Ce dispositif permet comme on l'a vu, de centrer le faisceau par rapport à l'axe de rotation du barillet 78 et donc de définir un référentiel pour introduire ce faisceau laser dans un dispositif optique ou dans une machine d'usinage par laser.

Ce dispositif donne également, en temps réel, des informations permettant d'asservir la position du faisceau laser à une valeur de consigne.

En particulier, deux dispositifs du genre de celui de la figure 12, montés l'un après l'autre, matérialisent une direction unique.

Un autre dispositif conforme à l'invention est schématiquement représenté sur la figure 14.

Ce dispositif de la figure 14 utilise la technique de prélèvement et d'échantillonnage mise en oeuvre dans le dispositif de la figure 12 pour contrôler le pointage d'un faisceau laser mais ce dispositif de la figure 14 est également susceptible d'être adapté à l'introduction d'un faisceau lumineux dans une fibre optique comme on le voit sur la figure 14.

En effet, ce dispositif de la figure 14 est identique à celui de la figure 9 à ceci près que, dans le cas de la figure 14, l'ensemble 22 ne comprend que le miroir tronconique 24 (le miroir tronconique 26 est supprimé).

L'ensemble 22 comprend à l'emplacement de ce miroir 26 une paroi cylindrique parallèle à l'axe y, qui reçoit la lumière prélevée par le miroir tronconique 24.

De plus, la pièce 60 est supprimée et remplacée par le barillet 78 de la figure 12, qui est encore commandé par le moteur 40 par l'intermédiaire de la courroie 42 et monté sur le roulement à billes 64 dans la tête de focalisation 10 pour tourner autour de l'axe y.

On voit aussi sur la figure 14 l'ensemble de synchronisation 48 qui fournit un "top" de synchronisation à chaque tour du barillet 78 et qui est monté à cet effet en regard de la face supérieure de ce barillet 78 (face qui est en regard du miroir plan percé 62).

On utilise encore par exemple une bande qui ne réfléchit pas la lumière et que l'on place sur cette face supérieure, en regard de l'ensemble de synchronisation 48.

Grâce aux signaux fournis par le photodétecteur 44 on est encore capable de contrôler le centrage et la focalisation axiale du faisceau laser 2 sur la fibre optique 4.

On notera que, dans le cas de la figure 14, ce contrôle est réalisé grâce à une analyse du faisceau laser en amont de la face d'entrée de la fibre optique 4 et non pas au niveau de cette face d'entrée.

## Revendications

1. Dispositif de contrôle de la coïncidence entre l'axe (x) d'un faisceau lumineux (2) et un axe de travail (y), ce dispositif étant caractérisé en ce qu'il comprend des moyens (24, 26, 34, 40, 44; 24, 26, 60, 40, 44; 24, 26, 62, 70; 82, 88, 90, 62, 44) de prélèvement d'une partie périphérique du faisceau lumineux le long d'un cercle dont l'axe est l'axe de travail (y) et de détection de la lumière ainsi prélevée, pour analyser la distribution angulaire de l'intensité lumineuse correspondante, cette distribution angulaire étant uniforme lorsque l'axe (x) du faisceau lumineux (2) coïncide avec l'axe de travail.

2. Dispositif selon la revendication 1, caractérisé en ce que les moyens de prélèvement et de détection comprennent :
- un premier miroir tronconique (24) dont l'axe coïncide avec l'axe de travail (y), qui comporte, à son sommet, un perçage centré sur l'axe de travail, et qui est prévu pour prélever ladite partie du faisceau lumineux le long dudit cercle et pour réfléchir la lumière ainsi prélevée,
- un deuxième miroir tronconique (26) dont l'axe coïncide également avec l'axe de travail (y), qui est solidaire du premier miroir tronconique (24) et entoure ce dernier et qui est prévu pour réfléchir la lumière réfléchie par ce premier miroir tronconique, et
- des moyens de détection (34, 40, 44; 60, 40, 44; 62, 70) de la lumière réfléchie par le deuxième miroir tronconique.

3. Dispositif selon la revendication 2, caractérisé en ce que les moyens de détection comprennent :
- des moyens d'échantillonnage (34, 40, 60) prévus pour échantillonner la lumière réfléchie par le deuxième miroir tronconique (26), et
- un photodétecteur (44) pour détecter les échantillons de lumière successivement formés, ce photodétecteur (44) permettant l'analyse de ladite distribution angulaire.

4. Dispositif selon la revendication 3, caractérisé en ce que les moyens d'échantillonnage comprennent :
- un troisième miroir (34) qui est situé sur le trajet de la lumière réfléchie par le deuxième miroir tronconique (26) pour intercepter une partie de cette lumière, qui est prévu pour réfléchir, vers le photodétecteur (44), cette partie ainsi interceptée, et qui est mobile en rotation autour d'un axe (z) qui rencontre l'axe de travail (y), et
- des moyens de rotation (40) du troisième miroir (34) autour de cet axe de rotation (z) de façon à former successivement les échantillons de lumière.

5. Dispositif selon la revendication 3, caractérisé en ce que les moyens d'échantillonnage comprennent :
- un organe (60) qui est placé en regard du deuxième miroir tronconique (26), qui est pourvu d'un perçage central (66) pour laisser passer le faisceau lumineux (2) dirigé vers les moyens de prélèvement et d'un perçage latéral (68) pour laisser passer une partie de la lumière réfléchie par ce deuxième miroir tronconique (26), et qui est mobile en rotation autour de l'axe de travail (y),
- des moyens (40) de rotation de cet organe (60) autour de l'axe de travail, de sorte que cet organe laisse passer des échantillons de lumière successifs, et
- un troisième miroir (62) qui est pourvu d'un perçage central (66) pour laisser passer le faisceau lumineux (2) dirigé vers les moyens de prélèvement et qui est prévu pour recevoir ces échantillons de lumière successifs et les réfléchir vers le photodétecteur (44).

6. Dispositif selon la revendication 2, caractérisé en ce que les moyens de détection comprennent :
- un troisième miroir (62) qui est pourvu d'un perçage central (66) pour laisser passer le faisceau lumineux (2) dirigé vers les moyens de prélèvement et qui est placé en regard du deuxième miroir tronconique (26), pour intercepter la lumière réfléchie par celui-ci, et
- un photodétecteur bidimensionnel (70) prévu pour recevoir la lumière réfléchie par ce troisième miroir (62), ce photodétecteur (70) permettant d'analyser globalement ladite distribution angulaire.

7. Dispositif selon la revendication 1, caractérisé en ce que les moyens de prélèvement et de détection comprennent :
- un ensemble de prélèvement et d'échantillonnage comportant :
• un premier miroir (88) qui est incliné par rapport à l'axe de travail (y) et qui est prévu pour prélever une partie du faisceau (2) à la périphérie de celui-ci, le long dudit cercle, et pour réfléchir cette partie prélevée,
• un deuxième miroir (90) qui est incliné- par rapport à l'axe de travail (y), qui est solidaire du premier miroir incliné (88) et qui est prévu pour réfléchir la lumière réfléchie par ce premier miroir incliné, et
• des moyens (82) de rotation de l'ensemble formé par les premier (88) et deuxième (90) miroirs inclinés, autour de l'axe de travail (y),
- un troisième miroir (62) qui est pourvu d'un perçage central pour laisser passer le faisceau lumineux dirigé vers l'ensemble de prélèvement et d'échantillonnage et qui est prévu pour intercepter la lumière réfléchie par le deuxième miroir incliné, et
- un photodétecteur (44) pour détecter la lumière réfléchie par ce troisième miroir (62), ce photodétecteur (44) permettant l'analyse de ladite distribution angulaire.

8. Dispositif selon la revendication 7, caractérisé en ce qu'il comprend en outre des moyens (92) de translation de l'ensemble formé par les premier (88) et deuxième (90) miroirs inclinés, perpendiculairement à l'axe de travail (y).

9. Système d'introduction d'un faisceau lumineux dans une fibre optique (4), ce système comprenant des moyens (8) de focalisation du faisceau lumineux (2) sur la face d'entrée de la fibre optique, ce système étant caractérisé en ce qu'il comprend en outre le dispositif selon l'une quelconque des revendications 1 à 6, en ce que l'axe de travail (y) est l'axe du coeur de la fibre optique et en ce que ledit cercle est dans le plan de la face d'entrée de cette fibre (4), le dispositif permettant alors de contrôler également la focalisation du faisceau lumineux sur la face d'entrée de la fibre, l'intensité lumineuse de la lumière détectée étant minimale lorsque cette focalisation est réalisée.

10. Système selon la revendication 9, caractérisé en ce que le dispositif est conforme à l'une quelconque des revendications 2 à 6 et en ce que le système comprend en outre des moyens (32) d'injection d'un fluide à l'intérieur du premier miroir tronconique (24) vers la face d'entrée de la fibre optique (4), afin de refroidir celle-ci.

## Patentansprüche

1. Vorrichtung zur Überwachung der Übereinstimmung zwischen einer Achse (x) eines Lichtbündels (2) und einer Arbeitsachse (y),
**dadurch gekennzeichnet**
daß sie Einrichtungen (24, 26, 34, 40, 44; 24, 26, 60, 40, 44; 24, 26, 62, 70; 82, 88, 90, 62, 44) zur Entnahme eines peripheren Teils des Bündels längs eines Kreises, dessen Achse die Arbeitsachse (y) ist, und zur Detektion des derart entnommenen Lichts umfaßt, um die Winkel- bzw. winkelmäßige Verteilung der entsprechenden Lichtstärke zu analysieren, wobei diese Winkelverteilung gleichmäßig ist, wenn die Achse (x) des Lichtbündels (2) übereinstimmt bzw. zusammenfällt mit der Arbeitsachse.

2. Vorrichtung nach Anspruch 1, dadurch gekennzeichnet, daß die Entnahme- und Detektionseinrichtungen umfassen:
- einen ersten kegelstumpfartigen Spiegel (24), dessen Achse zusammenfällt mit der Arbeitsachse (y), der an seiner Spitze eine auf die Arbeitsachse zentrierte Bohrung aufweist und der vorgesehen ist, den genannten Teil des Lichtbündels längs des genannten Kreises zu entnehmen und das so entnommene Licht zu reflektieren,
- einen zweiten kegelstumpfartigen Spiegel (26), dessen Achse ebenfalls zusammenfällt mit der Arbeitsachse (y), der aus einem Stück mit dem ersten kegelstumpfartigen Spiegel (24) ist und diesen letzteren umgibt und der vorgesehen ist, das durch diesen ersten kegelstumpfartigen Spiegel reflektierte Licht zu reflektieren, und
- Detektionseinrichtungen (34, 40, 44; 60, 40, 44; 62, 70) des durch den zweiten kegelstumpfartigen Spiegel reflektierten Lichts.

3. Vorrichtung nach Anspruch 2, dadurch gekennzeichnet, daß die Detektionseinrichtungen umfassen:
- Abtasteinrichtungen (34, 40, 60) zum Abtasten des durch den zweiten kegelstumpfartigen Spiegel (26) reflektierten Lichts, und
- einen Photodetektor (44), um die nacheinander gebildeten Lichtproben zu detektieren, wobei dieser Photodetektor (44) die Analyse der genannten Winkelverteilung ermöglicht.

4. Vorrichtung nach Anspruch 3, dadurch gekennzeichnet, daß die Abtasteinrichtungen umfassen:
- einen dritten Spiegel (34), der auf dem Weg des durch den zweiten kegelstumpfartigen Spiegel (26) reflektierten Lichts angeordnet ist, um einen Teil dieses Lichts aufzufangen, und vorgesehen ist, diesen aufgefangenen Teil in Richtung Photodetektor (44) zu reflektieren, und der um eine Achse (z) drehbar ist, welche die Arbeitsachse (y) schneidet, und
- Dreheinrichtungen (40) des dritten Spiegels (34) um diese Drehachse (z), um sukzessive diese Lichtmuster zu bilden.

5. Vorrichtung nach Anspruch 3, dadurch gekennzeichnet, daß die Abtasteinrichtungen umfassen:
- ein Organ (60), drehbar um die Arbeitsachse (y), dem zweiten kegelstumpfartigen Spiegel (26) gegenüberstehend, versehen mit einer zentralen Durchbohrung (66), um das auf die Entnahmeeinrichtungen gerichtete Lichtbündel (2) durchzulassen, und einer seitlichen Durchbohrung (68), um einen Teil des durch den zweiten kegelstumpfartigen Spiegel (26) reflektierten Lichts durchzulassen,
- Dreheinrichtungen (40) dieses Organs (60) um die Arbeitsachse, so daß dieses Organ sukzessive Lichtproben durchläßt, und
- einen dritten Spiegel (62), versehen mit einer zentralen Bohrung (66), um den auf die Entnahmeeinrichtungen gerichteten Lichtstrahl (2) durchzulassen, und dazu vorgesehen, diese sukzessiven Lichtproben aufzufangen und sie in Richtung Photodetektor (44) zu reflektieren.

6. Vorrichtung nach Anspruch 2, dadurch gekennzeichnet, daß die Detektionseinrichtungen umfassen:
- einen dritten Spiegel (62), versehen mit einer zentralen Bohrung (66), um den auf die Entnahmeeinrichtungen gerichteten Lichtstrahl (2) durchzulassen, und dem zweiten kegelstumpfartigen Spiegel (26) gegenüberstehend, um das durch diesen reflektierte Licht aufzufangen, und
- einen zweidimensionalen Photodetektor (70), vorgesehen zum Empfangen des durch diesen dritten Spiegel (62) reflektierten Lichts, wobei dieser Photodetektor (70) ermöglicht, die genannte Winkelverteilung global zu analysieren.

7. Vorrichtung nach Anspruch 1, dadurch gekennzeichnet, daß die Entnahme- und Detektionseinrichtungen umfassen:
- eine Entnahme- und Abtasteinheit, enthaltend:
. einen ersten Spiegel (88), der schräg ist in bezug auf die Arbeitsachse (y) und der dazu vorgesehen ist, einen Teil des Lichtbündels (2) an dessen Rand zu entnehmen, längs des genannten Kreises, und diesen entnommenen Teil zu reflektieren,
. einen zweiten Spiegel (90), schräg in bezug auf die Arbeitsachse (y), aus einem Stück mit dem ersten schrägen Spiegel (88) und vorgesehen, das durch diesen ersten schrägen Spiegel reflektierte Licht zu reflektieren, und
. Dreheinrichtungen (82) der aus dem ersten (88) und zweiten (90) schrägen Spiegel gebildeten Einheit um die Arbeitsachse (y),
- einen dritten Spiegel (62), versehen mit einer zentralen Durchbohrung, um den auf die Entnahme- und Abtasteinrichtung gerichteten Lichtstrahl durchzulassen, und dazu vorgesehen, das durch den zweiten schrägen Spiegel reflektierte Licht aufzufangen, und
- einen Photodetektor (44), um das durch den dritten Spiegel (62) reflektierte Licht zu detektieren, wobei dieser Photodetektor (44) die Analyse der genannten Winkelverteilung ermöglicht.

8. Vorrichtung nach Anspruch 7, dadurch gekennzeichnet, daß sie außerdem Einrichtungen (92) zur Parallelverschiebung der durch den ersten (88) und zweiten (90) schrägen Spiegel gebildeten Einheit senkrecht zur Arbeitsachse (y) umfaßt.

9. System zum Einführen eines Lichtbündels in eine optische Faser (4), wobei dieses System Fokussiereinrichtungen (8) des Lichtbündels (2) auf die Eintrittsfläche der optischen Faser umfaßt,
**dadurch gekennzeichnet,**
daß es außerdem die Vorrichtung nach einem der Ansprüche 1 bis 6 enthält, und dadurch, daß die Arbeitsachse (y) die Achse des Kerns der optischen Faser ist, und dadurch, daß der genannte Kreis in der Ebene der Eintrittsfläche dieser Faser (4) liegt, wobei die Vorrichtung dann ermöglicht, ebenfalls die Fokussierung des Lichtbündels auf die Eintrittsfläche der Faser zu kontrollieren bzw. zu steuern, und die Leuchtstärke des detektierten Lichts minimal ist, wenn diese Fokkusierung durchgeführt wird.

10. System nach Anspruch 9, dadurch gekennzeichnet, daß die Vorrichtung einem der Ansprüche 2 bis 6 entspricht, und dadurch, daß das System außerdem Einrichtungen (32) zum Einleiten eines Fluids ins Innere des ersten kegelstumpfartigen Spiegels (24) hin zur Eintrittsfläche der optischen Faser (4) umfaßt, um diese zu kühlen.

## Claims

1. Device for checking the coincidence between the axis (x) of a light beam (2) and a working axis (y), characterized in that it comprises means (24, 26, 34, 40, 44; 24, 26, 60, 40, 44; 24, 26, 62, 70; 82, 88, 90, 62, 44) for sampling a peripheral part of the light beam along a circle, whose axis is the working axis (y) and detecting the thus sampled light in order to analyze the angular distribution of the corresponding lighting intensity, said angular distribution being uniform when the axis (x) of the light beam (2) coincides with the working axis.

2. Device according to claim 1, characterized in that the sample taking and detection means incorporate a first truncated cone-shaped mirror (24), whose axis coincides with the working axis (y) and which has at its apex a hole centred on the working axis and which serves to sample the said part of the light beam along said circle and reflect the thus sampled light, a second truncated cone-shaped mirror (26), whose axis also coincides with the working axis (y), which is integral with the first truncated cone-shaped mirror (24) and surrounds the latter and which reflects the light reflected by the first truncated cone-shaped mirror and means (34, 40, 44; 60, 40, 44; 62, 70) for detecting the light reflected by the second truncated cone-shaped mirror.

3. Device according to claim 2, characterized in that the detection means incorporate sampling means (34, 40, 60) for sampling the light reflected by the second truncated cone-shaped mirror (26) and a photodetector (44) for detecting the successively formed light samples, said photodetector (44) making it possible to analyze said angular distribution.

4. Device according to claim 3, characterized in that the sampling means incorporate a third mirror (34), which is located on the path of the light reflected by the second truncated cone-shaped mirror (26) in order to intercept part of said light, which reflects towards the photodetector (44) said intercepted part and which rotates about an axis (z), which meets the working axis (y) and means (40) for rotating the third mirror (34) about said rotation axis (z) so as to successively form the light samples.

5. Device according to claim 3, characterized in that the sampling means incorporate a member (60) positioned facing the second truncated cone-shaped mirror (26), which has a central hole (66) to permit the passage of the light beam (2) directed towards the sample taking means and a lateral hole (68) to permit the passage of part of the light reflected by said second truncated cone-shaped mirror (26) and which rotates about the working axis (y), means (40) for rotating said member (60) around the working axis, so that said member permits the passage of successive light samples and a third mirror (62) having a central hole (66) for permitting the passage of the light beam (2) directed towards the sample taking means and which receives successive light samples and reflects them towards the photodetector (44).

6. Device according to claim 2, characterized in that the detection means incorporate a third mirror (62) having a central hole (66) for permitting the passage of the light beam (2) directed towards the sample taking means and which is positioned facing the second truncated cone-shaped mirror (26) in order to intercept the light reflected by the latter and a bidimensional photodetector (70) for receiving the light reflected by the third mirror (62), said photodetector (70) permitting an overall analysis of said angular distribution.

7. Device according to claim 1, characterized in that the sample taking and detection means incorporate a sample taking and sampling assembly having a first mirror (88) inclined with respect to the working axis (y) and provided for sampling part of the beam (2) at the periphery thereof, along said circle and for reflecting said sampled part, a second mirror (90) inclined with respect to the working axis (y), which is integral with the first inclined mirror (88) and which reflects the light reflected by said first inclined mirror and means (82) for rotating the assembly formed by the first (88) and second (90) inclined mirrors about the working axis (y), a third mirror (62) provided with a central hole for permitting the passage of the light beam directed towards the sample taking and sampling assembly and which intercepts the light reflected by the second inclined mirror and a photodetector (44) for detecting the light reflected by the mirror (62), said photodetector (44) permitting the analysis of said angular distribution.

8. Device according to claim 7, characterized in that it also comprises means (92) for the translation of the assembly formed by the first (88) and second (90) inclined mirrors, perpendicular to the working axis (y).

9. System for the introduction of a light beam into an optical fibre (4), said system incorporating means (8) for focussing the light beam (2) onto the entrance face of the optical fibre, wherein it also comprises the device according to any one of the claims 1 to 6, characterized in that the working axis (y) is the axis of the core of the optical fibre and wherein said circle is in the plane of the entrance face of said fibre (4), the device then making it possible to also check the focussing of the light beam on the entrance face of the fibre, the lighting intensity of the detected light being at a minimum when said focussing is performed.

10. System according to claim 9, characterized in that the device is in accordance with any one of the claims 2 to 6 and in that the system also comprises means (32) for injecting a fluid within the first truncated cone-shaped mirror (24) towards the entrance face of the optical fibre (4) in order to cool the latter.
